**Europäisches Patentamt**

**European Patent Office**

**Office européen des brevets**

(19)

(11) Veröffentlichungsnummer : **0 012 947**
**B1**

(12)

# EUROPÄISCHE PATENTSCHRIFT

(45) Veröffentlichungstag der Patentschrift :
24.11.82

(51) Int. Cl.³ : **B 23 K** 9/16, B 23 K 9/02

(21) Anmeldenummer : 79105151.9

(22) Anmeldetag : 13.12.79

(54) **Verfahren und Einrichtung zum Herstellen von massgenauen Bauteilen durch Lichtbogenschweissen.**

(30) Priorität : 27.12.78 DE 2856154

(43) Veröffentlichungstag der Anmeldung :
09.07.80 (Patentblatt 80/14)

(45) Bekanntmachung des Hinweises auf die Patenterteilung : 24.11.82 Patentblatt 82/47

(84) Benannte Vertragsstaaten :
AT CH FR IT SE

(56) Entgegenhaltungen :
DE A 1 540 760
FR A 1 049 179

DIN-Taschenbuch 8 Schweisstechnische Normen 1965 Beuth Vertrieb GmbH S. 70

(73) Patentinhaber : **KRAFTWERK UNION AKTIENGE-
SELLSCHAFT**
**Wiesenstrasse 35**
**D-4330 Mülheim (Ruhr) (DE)**

(72) Erfinder : **Steinkamp, Eckhard**
**Schornbaumstrasse 2**
**D-8520 Erlangen (DE)**
Erfinder : **Tautz, Jürgen**
**Buchenstrasse 15**
**D-8551 Hemhofen (DE)**

(74) Vertreter : **Mehl, Ernst, Dipl.-Ing.**
**Postfach 22 01 76**
**D-8000 München 22 (DE)**

Verfahren und Einrichtung zum Herstellen von maßgenauen Bauteilen durch Lichtbogenschweißen

Die Erfindung betrifft ein Verfahren nach dem Oberbegriff des Anspruchs 1 (DIN Taschenbuch 8, Schweißtechnische Normen 1965 Benth Vertrieb GmbH S70).

Bei einem aus der DE-A-15 40 760 bekannten Verfahren zum Lichtbogenschweißen von Blechen wird das gemeinsame Schmelzbad von beiden Seiten mit abschmelzenden, automatisch zugeführten Drahtelektroden gespeist. Dabei sollen im Zentrum des Lichtbogens bis zu 10 000 °C erreicht werden und ein einziger Arbeitsgang zum Verschweißen von dicken Blechen bis über 30 mm Stärke ausreichen. Als Anwendungsgebiet sind der Behälterbau und der Schiffsbau genannt. Hier sind aus Wirtschaftlichkeitsgründen hohe Abschmelzleistungen wünschenswert und Toleranzen im Millimeterbereich üblich.

Bei der Herstellung von Bauteilen für kerntechnische Anlagen kommt es dagegen zur Erfüllung der an die Bauteile gestellten Forderungen, wie Funktionstüchtigkeit, Festigkeit usw. auf eine genaue Maßhaltigkeit an. So unterliegen solche Bauteile, insbesondere durch die Erwärmung zwischen Raumtemperatur und den Betriebstemperaturen von 300 °C oder mehr, hohen Beanspruchungen.

Außerdem sind viele Bauteile von kerntechnischen Anlagen, insbesondere Kerntragstrukturen wie Kerngitter, Kernumfassungen oder dergleichen aus nichtrostendem Stahl hergestellt, der ohnehin besondere Erfordernisse an die Verarbeitung stellt. Die Bauteile sind auch meist so groß, daß sie nur mit erheblichen Kosten nach einer Schweißung nachgearbeitet werden können, um die erforderliche Maßhaltigkeit zu erreichen.

Die vorstehend erörterten Schwierigkeiten werden erfindungsgemäß durch die kennzeichnenden Merkmale des Anspruchs 1 vermieden.

Bei der Erfindung liegen die zu verschweißenden Teile mit der breiten Stoßfläche ohne Spalt aneinander an, so daß sie gut fixiert werden können. Zum Beispiel können sie mit einer Vorspannung von $10^6$ Pa (10 kp/cm$^2$) oder mehr aneinandergedrückt werden, wobei die Größe der Stoßfläche kleine Flächenpressungen ergibt. Mindestens soll die Festlegung beim Schweißen so starr sein, daß die dabei auftretenden Kräfte ohne Lageänderung und Verformung der Teile aufgenommen werden.

Außerdem werden die von der Schweißung ausgehenden Kräfte begrenzt, weil die Abmessungen des Schmelzbades und damit die Wärmeeinbringung in bezug auf die Breite der Stoßfläche und damit auf die Haltekraft festgelegt sind. Daraus ergibt sich ein verzugsfreies Schweißen der Stoßfläche, das noch durch den Einsatz des WIG-Impulsschweißens mit seiner optimalen Schmelzbadbeherrschung in allen Zwangslagen der Naht und durch die Verwendung von Helium als Schutzgas wirkungsvoll unterstützt werden kann, weil Helium bei tiefem Einbrand geringe Schmelzbadabmessungen ergibt und damit die geringstmöglichen Schädigungen des Grundwerkstoffs, zum Beispiel durch Dendritenbildung, zur Folge hat. Zur Verbesserung der Schmelzbadstruktur kann man auch einen Zusatzwerkstoff einsetzen, und zwar vorzugsweise in Form eines Blechstreifens, der zwischen den zu verschweißenden Teilen festgeklemmt wird.

Die Erfindung ist somit etwas ganz anderes als das Schweißen nach der eingangs genannten deutschen Offenlegungsschrift, denn dabei stehen sich Enden der miteinander zu verschweißenden Teile mit Abstand gegenüber, und der dazwischen gebildete Spalt wird in voller Breite der Teile mit zugeführtem Schweißmaterial gefüllt, das als Lichtbogenelektrode dient und deshalb schon wegen der Zuführungsbewegung keinen ruhigen Fußpunkt für einen genau dosierten Lichtbogen gewährleisten kann. In der deutschen Offenlegungsschrift 15 40 760 ist sogar darauf hingewiesen, daß das Werkstück gar nicht an der Führung des Schweißstromes beteiligt zu sein braucht.

Wie gefunden wurde, können die Breiten der Stoßflächen, die in erster Linie mit nach Größe und Zeitverlauf gleichem Strom über die beiden nicht abschmelzenden Elektroden verschweißt werden, noch erheblich größer als 5 mm sein und zum Beispiel 10 bis 15 mm betragen. Sie sollten jedenfalls mindestens ein Viertel der Dicke der zu verschweißenden Teile betragen, damit eine maßgenaue Festlegung auch bei einer weiteren Bearbeitung, insbesondere bei den Füllagenschweißungen erhalten bleibt.

Die für dickere Teile vorgesehene Füllagenschweißung nach dem Erkalten der Schweißung der Stoßfläche braucht nicht etwa erst bei Raumtemperatur vorgenommen zu werden, sondern sie kann ohne Beeinträchtigung der Maßhaltigkeit ausgeführt werden, wenn das Bauteil beim Aufbringen der Füllschweißung zum Beispiel nicht mehr als 100 °C warm ist. Dies gilt besonders dann, wenn die Füllagenschweißung mit kleinerer Leistung als die Schweißung der Stoßfläche erfolgt, so daß die Wärmeeinbringung und die darauf beruhende Gefahr eines Verzuges entsprechend kleiner ist.

Für die Überwachung der Güte der Schweißnaht sowie zur Protokollierung kann man das erfindungsgemäße Verfahren so ausführen, daß beim Schweißen der Stoßfläche wesentliche Schweißdaten, insbesondere der Verlauf des Schweißstromes über die nicht abschmelzenden Elektroden, registriert werden. Zum Beispiel können die Schweißdaten magnetisch aufgezeichnet werden. Hierbei erleichtert der kurzschlußfreie Schweißstrom des WIG-Impulsverfahrens die genaue Aufzeichnung des Stromes, die unter Umständen auch mit der automatischen Regelung der Lichtbogenlänge über den Spannungsabfall zusammengefaßt werden kann.

Ferner sind auch Wegmarkierungen denkbar, die eine räumliche Zuordnung der Schweißdaten ermöglichen.

Zur Ausübung des Verfahrens nach der Erfindung kann man vorteilhaft eine Einrichtung verwenden, bei der eine Aufnahmevorrichtung für die zu verschweißenden Teile eine Platte umfaßt, die quer zu der zu schweißenden Stoßfläche verläuft und eine Ausnehmung für eine Lehre aufweist, mit der die Platte und die zu verschweißenden Teile aufeinander auszurichten sind, bei der an der Platte Befestigungsmittel zum Verbinden der Platte und der Teile angebracht sind und bei der an der Platte gemeinsame Zentrierbohrungen oder -zapfen für die Lehre und eine Schweißmaschine mit einer quer zu der Platte bewegbare Halterung sitzen, die zwei Schweißköpfe mit den nicht abschmelzenden Elektroden trägt.

Mit der neuen Einrichtung kann man die notwendige Ausrichtung zwischen den zu verschweißenden Teilen und der Schweißmaschine, die gerade für das erfindungsgemäße Verfahren mit seiner geringen und gezielten Wärmeeinbringung wesentlich ist, ohne großen Meßaufwand mit der erforderlichen Genauigkeit erhalten, weil die Platte als relativ leichtes Bauteil direkt mit der Lehre in bezug auf die zu schweißende Stoßfläche justiert und fixiert werden kann. Wird dann nach dem Abbau der Lehre die Schweißmaschine mit ihrer Halterung aufgesetzt, so ist sie durch die Platte nach dem Sitz der Lehre zentriert, und es kann sofort ohne Nachrichten geschweißt werden. Ebenso kann die Halterung auch für Kontrollen und Prüfungen abgehoben und dann ohne erneutes Ausrichten wieder aufgesetzt werden, weil die justierte Platte fixiert geblieben ist.

Die zu verschweißenden Teile können mit Hilfe der Platte selbst ausgerichtet und aneinandergedrückt werden. Besonders bei großen Teilen kann es aber noch günstiger sein, dazu eine Einspannvorrichtung zu verwenden, die dann ihrerseits selbst oder über die zu verschweißenden Teile mit der Aufnahmevorrichtung verbunden wird. Die Einspannvorrichtung kann ohne Rücksicht auf die Befestigung und Bewegung der Schweißmaschine allein auf das Ausrichten und Festhalten der zu schweißenden Teile hin ausgelegt werden.

Die Halterung kann zweiteilig ausgebildet sein, wobei jeder Halterungsteil einen Schweißkopf trägt und auf einer parallel zu der Stoßfläche liegenden Spindel als Wandermutter angeordnet ist. Die beiden Halterungsteile können im Prinzip einzeln an der Platte der Aufnahmevorrichtung zu befestigen sein. Noch günstiger ist es jedoch, dafür einen gemeinsamen Rahmen zu verwenden, der als stabiler Grundkörper der Schweißmaschine dient. Insbesondere kann die Halterung symmetrisch mit einer durch die Stoßfläche verlaufenden Symmetrieebene sein. Diese Symmetrie ist auch für die im folgenden genannten weiteren Merkmale vorteilhaft.

Die beiden Spindeln können über ein gemeinsames formschlüssiges Antriebsglied mit einem Motor verbunden sein. Als formschlüssiges Antriebsglied eignet sich insbesondere ein Zahnriemen.

Die Schweißköpfe können an der Halterung schwenkbar befestigt sein. Damit kann man unterschiedliche Neigungen der nicht abschmelzenden Elektroden gegenüber dem Verlauf der Stoßfläche einstellen, um die unter Umständen von der Materialbeschaffenheit abhangende optimale Richtung des Lichtbogens und des Schmelzbades einzustellen. Dies gilt besonders für den Fall, daß die Schweißung der Stoßfläche ohne Schweißdrahtzusatz erfolgt und dann für Füllagen mit Schweißdrahtzusatz gearbeitet wird.

An der Platte können zwei Seilrollen beweglich befestigt sein, die jeweils auf einer Seite der Stoßfläche liegen und Versorgungsleitungen zu den Schweißköpfen führen. Die Versorgungsleitungen umfassen Kabel zur Führung des Schweißstromes und gegebenenfalls Meßleitungen aber auch Schläuche, die ein Schutzgas, insbesondere das schon erwähnte Helium, zur Schweißstelle führen. Sie können ferner Stromzuführungsleitungen einschließen, die den Schweißköpfen zugeordnete Motoren für den Schweißdrahtvorschub und evtl. Elektrodenbewegungen speisen.

Zur näheren Erläuterung der Erfindung wird anhand der beiliegenden Zeichnung ein Ausführungsbeispiel beschrieben. Dabei zeigen die Fig. 1 und 2 die Einrichtung nach der Erfindung in schematischer Darstellung in einer Seitenansicht und einen Horizontalschnitt, Fig. 3 die Schweißnaht mit geschweißter Wurzel im Maßstab 1 : 1, Fig. 4 einen Vertikalschnitt und Fig. 5 eine Draufsicht der Einrichtung mit unterschiedlichen Einzelheiten, Fig. 6 und 7 eine zu der Einrichtung gehörende Einspannvorrichtung in einer Draufsicht und einem Vertikalschnitt in größerem Maßstab.

Das zu schweißende Werkstück ist ein Kerngitter 1 zur Halterung von Brennelementen in einem Druckwasserreaktor, das aus austenitischen Stahl besteht und aus Profilstäben 2 und 3 zusammengeschweißt wird, wie in der DE-PS 2 549 423 angegeben ist. Zum Schweißen werden die Gitterteile 2 und 3 mit einer nicht dargestellten Einspannvorrichtung gegeneinander gepreßt, wie durch die Pfeile 5 und 6 angedeutet ist. Die Anpreßkraft kann einen Druck von zum Beispiel $10^7$ Pa (100 kp/cm²) ausmachen, der auf die Stoßfläche 8 zwischen den Teilen 2 und 3 wirksam wird. Die Größe der Stoßfläche 8 ist gegeben durch die Breite B der Stoßfläche und die Höhe H der miteinander zu verschweißenden Teile. Die Breite B beträgt mindestens 5 mm, beim Ausführungsbeispiel liegt sie bei 10 mm. Dies ergibt bei einer Höhe H von 400 mm eine Fläche von 40 cm². Daraus ergibt sich eine Anpreßkraft von $40 \cdot 10^3$ N (4 000 kp).

Auf die verspannten Teile 2 und 3 wird eine Schweißmaschine 9 mit einer einstellbaren Halterung 10 gesetzt, deren Arme 11 und 12 zu beiden Seiten über die Teile 2 und 3 greifen. Die Arme 11, 12 tragen zwei gegenüberliegende Schweißköpfe 14 und 15 mit stabförmigen Wolframelektroden 16 und 17, die sich fluchtend gegenüberliegen.

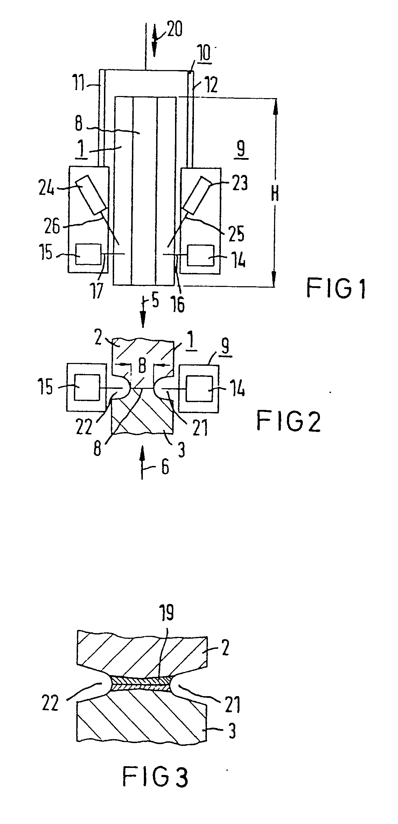

Die Schweißköpfe 14 und 15 werden entsprechend dem WIG-Impulsverfahren mit Hilfe eines nicht dargestellten Steuergerätes aus zwei gleichen Schweißstromquellen möglichst synchron mit einem pulsierenden Schweißstrom gespeist, beispielsweise mit etwa 120/200 Ampere und einstellbaren Schweißtaktzeiten von 0,25 sec. und 0,35 sec. Damit wird der Bereich der Stoßfläche 8 als Schweißnaht ohne Schweißdrahtzusatz durchgeschweißt. Bei der angegebenen Schweißstromstärke hat das gemeinsame Schmelzbad 19 (Fig. 3), d.h. der jeweils erweichte Bereich der aneinander gedrückten Teile 2 und 3, in seinem annähernd kreisförmigen Querschnitt einen größten Durchmesser von etwa 5 mm. Die Halterung 10 wird dabei, wie durch die Pfeile 20 angedeutet ist, mit einer Geschwindigkeit von etwa 15 cm/min entweder von oben nach unten oder von unten nach oben über die Höhe H des Bauteils 1 geführt.

Da die Teile 2 und 3 30 mm dick sind, werden nach dem Schweißen der Wurzel entsprechend der Stoßfläche 8 Füllagen eingebracht, mit der die verbleibenden Ausnehmungen 21 und 22 aufgefüllt werden. Zu diesem Zweck wird den WIG-Schweißköpfen 14 und 15 mit den Elektroden 16 und 17 je eine Schweißdrahtzuführung 23 und 24 zugeordnet. Der Schweißdraht 25 bzw. 26 wird dann im Lichtbogen, der von den Elektroden 16 und 17 ausgeht, symmetrisch und gleichzeitig auf beiden Seiten abgeschmolzen. Dabei kann die Halterung 10 oder jeder einzelne der Schweißköpfe 14, 15 und der Drahtzuführungen 23, 24 innerhalb des Bereiches der Naht so pendeln, daß die Schweißnaht bei einer Bewegung der Halterung 10 über die Höhe H gleichmäßig aufgefüllt wird. Dieses Pendeln kann mechanisch oder elektromagnetisch bewirkt werden.

Das Pendeln kann unter Umständen schon bei dem Durchschweißen der Wurzel an der Stoßfläche 8 erfolgen, das im übrigen nicht immer ohne Schweißdrahtzusatz ausgeführt werden muß. Zum Beispiel ist es manchmal vorteilhaft, das Gefüge in der Schweißnaht durch beim Schweißen zugeführten Werkstoff zu beeinflussen. Dieser Zusatz zur Erzielung optimaler Schmelzbadanalysen kann auch in Form von Blechstreifen in der Stoßstelle ausgebildet sein, die zwischen den Teilen 2, 3 beim Zusammenspannen festgeklemmt werden.

Der Schweißdraht 25, 26 kann kalt oder mit Erwärmung zugeführt werden, wie dies für die chemische Zusammensetzung und im Hinblick auf die Korrosionseigenschaften günstig ist. Außerdem erfolgt das Schweißen mit einer Schutzgasatmosphäre, die auf den zu verschweißenden Werkstoff und gegebenenfalls auch auf die Nahtform eingestellt wird.

Beim Ausführungsbeispiel hat der Schweißdraht-Werkstoff die Nummer 1.4551 nach DIN 17007. Als Schutzgas wird Helium verwendet. Daraus ergibt sich die in Fig. 3 ersichtliche Größe des Schmelzbades 19, das durch den schraffierten Bereich angedeutet ist. Man erkennt, daß dieser Bereich, der räumlich annährend rotationssymmetrisch ist, klein gegenüber den Abmessungen der zu verschweißenden Teile 2, 3 ist. Deswegen sind auch die zu einem Verzug führenden Beanspruchungen klein.

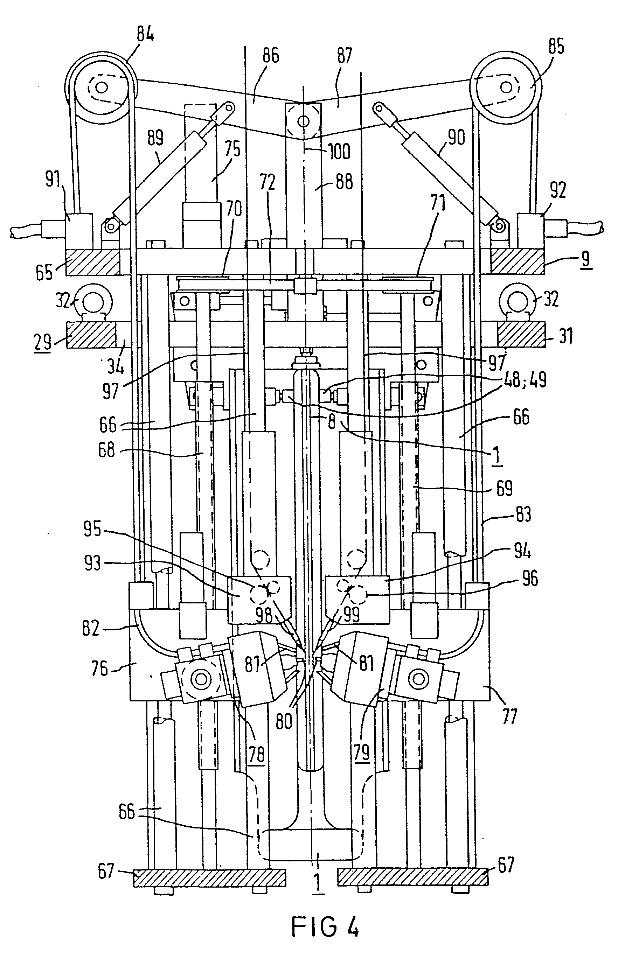

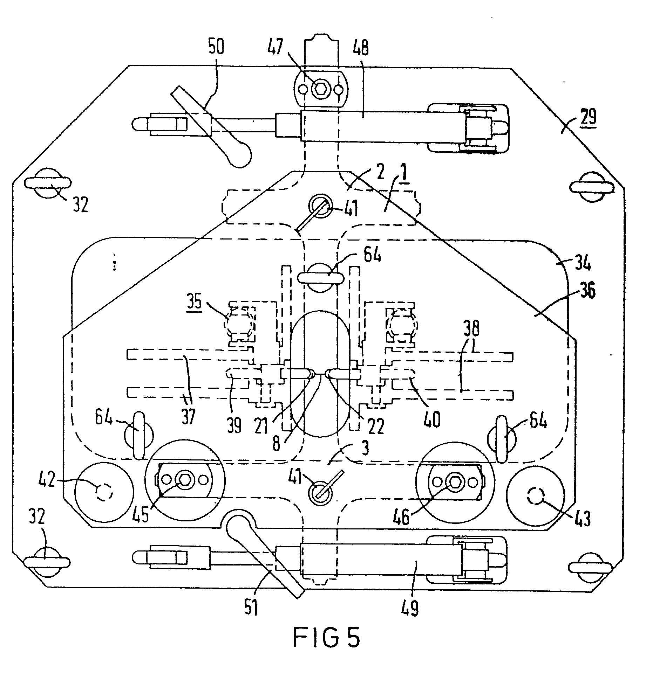

Die in Fig. 4 bis 7 gezeigten Einzelheiten einer Einrichtung zum Lichtbogenschweißen nach der Erfindung gehen über die vorstehend schematisch erläuterte Schweißmaschine 9 deswegen hinaus, weil sie auch die Einspannung des Bauteils 1 berücksichtigen und das Ausrichten der Schweißmaschine 9 zum Bauteil 1 ermöglichen. Dabei zeigt die Fig. 4 Einzelheiten der Schweißmaschine 9 und die Fig. 5 Einzelheiten einer zur Ausrichten verwendeten Lehre.

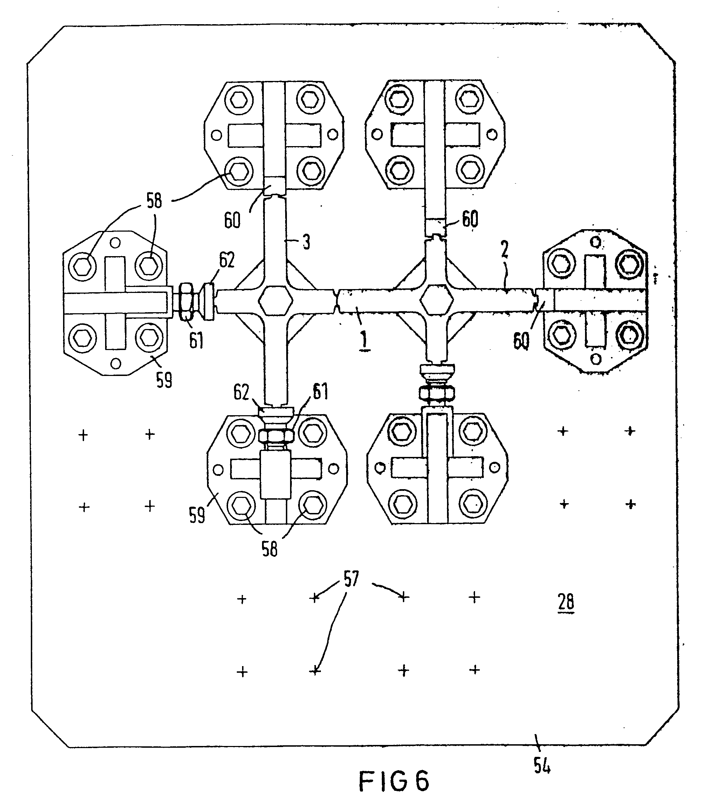

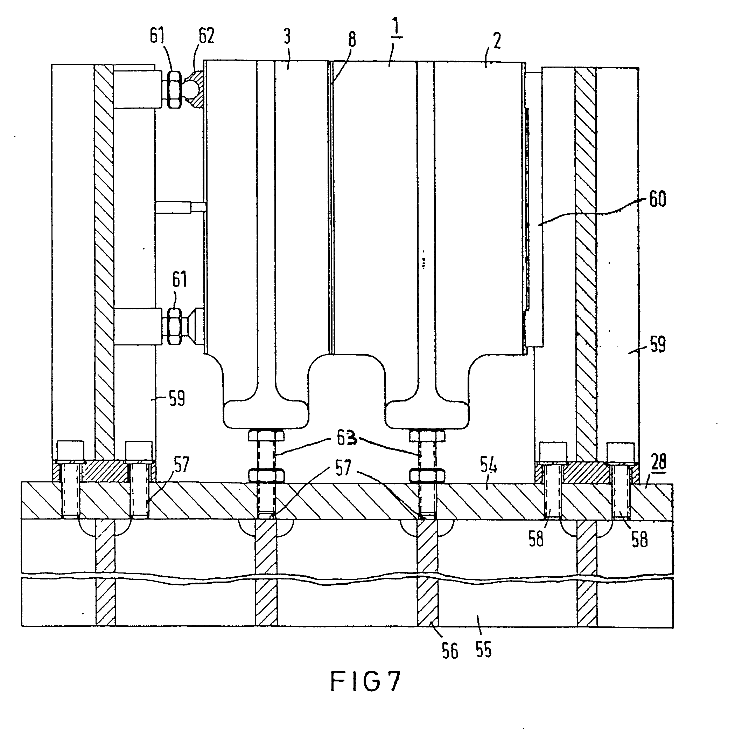

Das Kerngitter 1 mit seinen beiden Teilen 2 und 3 ist in einer anhand der Fig. 6 und 7 später beschriebenen Einspannvorrichtung 28 ausgerichtet und eingespannt. Mit dieser ist es in einer Aufnahmevorrichtung 29 festgelegt, die als wesentliches Element eine Platte 31 umfaßt. An der Oberseite der Platte 31 sind Kranösen 32 vorgesehen, so daß die Aufnahmevorrichtung 29 auf das Kerngitter 1 abgesenkt werden kann. Die Platte 31 besitzt eine Ausnehmung 34, durch die der Bereich der Stoßfläche 8 von oben zugänglich ist.

An den der Stoßfläche 8 benachbarten Ausnehmungen 21 und 22 der Teile 2 und 3 kann mit Hilfe einer in Fig. 5 weitgehend gestrichelt gezeichneten Lehre 35 die Platte 31 auf das Kerngitter 1 ausgerichtet werden. Die Lehre 35 umfaßt eine Grundplatte 36 mit zwei Armen 37 und 38, in denen je zwei exzentrisch gelagerte Scheiben 39 und 40 in Richtung der Ausnehmungen 21, 22 übereinander liegen. Durch Drehung um die exzentrischen Achsen werden die Scheiben 39, 40 in die Ausnehmungen 21, 22 gepreßt, so daß die Grundplatte 36 eine definierte Lage, zum Beispiel genau rechtwinklig zur ebenen Stoßfläche 8 des Kerngitters 1 hat. Dann wird die Platte 31 nach der Grundplatte 36 ausgerichtet. Zu diesem Zweck werden die Platten 31, 36 mit Distanzblöcken 41 gegeneinander distanziert und über Führungsstifte 42 und 43 gegen seitliche Verschiebungen miteinander verankert. Dann wird die Platte 31 an der Oberseite des Kerngitters 1 über Distanzbolzen 45, 46 und 47 abgestützt, die in der Platte 31 als Schrauben verstellbar sind. Schließlich wird die Platte 31 mit hydraulisch betätigten Klemmbacken 48 und 49 festgespannt, die fluchtend zueinander auf gegenüberliegenden Seiten der Platte 31 sitzen und am Teil 2 einerseits und Teil 3 andererseits angreifen. Die Klemmstellung und damit die exakte Befestigung der Platte 31 wird dann mit Exzenterknebeln 50 und 51 gesichert.

Die Ausrichtung der Teile 2 und 3 aufeinander erfolgt mit Hilfe der Einspannvorrichtung 28. Zu dieser gehört nach den Fig. 6 und 7 eine ebene Spannplatte 54, die durch gitterförmig angeordnete Rippen 55 und 56 versteift ist und eine Vielzahl von gleichen Gewindebohrungen 57 aufweist. Mit den Bohrungen 57 werden mit je vier Schrauben 58 Spanten 59 befestigt, die sich rechtwinklig zur Spannplatte 54 erstrecken und in den Achsrichtungen des Kerngitters 1 gegenüberliegen. Die Spanten 59 tragen entweder Stützleisten 60 oder einstellbare Druckschrauben 61 mit gelenkig befestigten Köpfen 62 zum Aufbringen der Halte- und Vorspannkraft für die Teile 2 und 3. Die richtige Höhenlage der Teile 2, 3 ist durch Distanzschrauben 63 festgelegt.

Nach dem Festklemmen der Aufnahmevorrichtung 29 auf den Teilen 2 und 3 wird die Lehre 35 durch die Öffnung 34 abgebaut, wobei ein Hebezeug an Kranösen 64 angreift. Nunmehr wird auf die Platte 31 die Halterung 10 der Schweißmaschine 9 aufgesetzt, so daß mit Hilfe von identischen Führungsstiften 42, 43 (Fig. 5) und Distanzstücken von vornherein, d.h. ohne weiteres Ausrichten, die richtige Zuordnung zu den zu verschweißenden Teilen 2 und 3 des Kerngitters 1 gegeben ist.

Die Schweißmaschine 9 umfaßt, wie Fig. 4 zeigt, eine Tragplatte 65, die den wesentlichen Teil der Halterung 10 bildet und auf die Platte 31 entsprechend der Grundplatte 36 der Lehre 35 ausgerichtet ist. Die Tragplatte 65 ist über Führungsstangen 66 mit unteren Abschlußblechen 67 verbunden, so daß eine praktisch zweiteilige Halterung gebildet wird. Dazwischen sind auf gegenüberliegenden Seiten des Kerngitters 1 zwei Spindeln 68 und 69 angeordnet, die dicht unterhalb der Platte 65 Zahnräder 70 und 71 aufweisen. Die Zahnräder 70, 71 sind durch einen Zahnriemen 72 verbunden. Deshalb drehen sich die beiden Spindeln 68, 69 synchron, wenn sie von einem auf der Platte 65 sitzenden Getriebemotor 75 in Bewegung gesetzt werden.

Auf den Spindeln 68, 69 sitzen als Wandermuttern zwei Halterungsteile 76 und 77, an denen zwei Schweißköpfe 78 und 79 mit horizontalen Gelenkachsen schwenkbar befestigt sind. Die Schweißköpfe 78, 79 umfassen in gleicher Symmetrischer Anordnung stiftförmige Elektroden 80 aus Wolfram sowie Düsenkörper 81 für das als Schutzgas verwendete Helium, das den Schweißköpfen 78 und 79 über Schläuche 82 und 83 zugeführt wird.

Die Schläuche 82, 83 sind, wie die Fig. 4 deutlich zeigt, über Seilrollen 84 und 85 geführt, die oberhalb der Platte 65 an Schwenkhebeln 86 und 87 sitzen. Die Schwenkhebel stützen sich über einen Träger 88 an der Platte 65 ab. Sie stehen unter der Wirkung von Federbeinen 89 und 90, die sie von der Platte 65 wegzudrücken suchen, damit die Schläuche 82 und 83 ständig straff geführt sind. Die den Schweißköpfen 78 und 79 abgekehrten Enden der Schläuche sind in Anschlußbuchsen 91 und 92 befestigt, die auf der Platte 65 sitzen und von äußeren Heliumquellen gespeist werden.

Parallel zu den Schläuchen 82, 83 verlaufen nicht dargestellte Leitungen für den Schweißstrom, die mit den Elektroden 80 verbunden sind. Sie können ebenfalls zu den Anschlußbuchsen 91, 92 führen, wo vorzugsweise Steckverbindungen für den Anschluß von nicht weiter dargestellten Generatoren für den Schweißstrom vorgesehen sind.

Den Schweißköpfen 78 und 79 sind Führungseinrichtungen 93 und 94 zugeordnet, die mit Rollen 95 bzw. 96 für die Zuführung von drahtförmigem Zusatzwerkstoff 97 vorgesehen sind, der durch sich verjüngende Rohre 98 und 99 in den Bereich der Elektroden 80 geführt werden kann. Die Rollen 95 und 96 können gemeinsam oder einzeln angetrieben werden, wenn die Schweißung mit Zusatzwerkstoff erfolgen soll. Als Antrieb eignet sich unter Umständen die Drehbewegung der Spindeln 68 und 69, womit zugleich eine Übereinstimmung mit der Vorschubbewegung der Schweißköpfe 78 und 79 gegeben ist.

Wie man sieht, ist die neue Einrichtung symmetrisch zu der strichpunktierten Mittellinie 100 in der Stoßfläche 8 angeordnet. Deshalb kann mit ihr durch gleichzeitiges Schweißen mit geringer Erwärmung eine Verbindung der Teile 2 und 3 hergestellt werden, die einen praktisch verrachlässigbaren Verzug zur Folge hat. Nach dem Schweißen der Stoßfläche 8 kann dann mit der gleichen Einrichtung das Auflegen von Füllagen erfolgen, wobei der Schweißstrom die beim Schweißen der Stoßfläche 8 vorgesehene maximale Stromstärke von 200 Ampere nicht überschreitet. Da das Schweißen der Füllagen außerdem nach dem Abkühlen der geschweißten Stoßfläche vor sich geht, kann auch das Auftragen der Füllagen nicht zu sonst praktisch unvermeidlichen Wärmedehnungen führen, die einen Schweißverzug zur Folge haben.

Die Schweißmaschine 9 kann zum Beispiel zu Überprüfungen der Schweißnaht ohne weiteres aus der Öffnung 34 der Platte 31 herausgezogen werden, da sie danach jederzeit ohne zusätzliches Ausrichten wieder auf die Platte 31 aufgesetzt werden kann, die mit dem zu schweißenden Kerngitter 1 über die Klemmbacken 48, 49 verbunden bleit.

## Ansprüche

1. Verfahren zum Verbinden von metallischen Teilen mit einer Stumpfnaht durch WIG-Schweißen der bearbeiteten Wurzel und gegebenenfalls durch Auftragen von Füllagen ebenfalls mit WIG-Schweißen, dadurch gekennzeichnet, daß zum Herstellen von maßgenauen Bauteilen für kerntechnische Anlagen, insbesondere von Kerntragstrukturen, die Teile an der zu verschweißenden Wurzel mit einer mindestens 5 mm breiten Stoßfläche versehen und an dieser gegeneinander gepreßt werden, daß die nicht abschmelzenden Elektroden an der zu schweißenden Wurzel symmetrisch zentriert werden, daß dann die Wurzel in an sich bekannter Weise gleichzeitig von beiden Seiten durchgeschweißt wird, wobei die Schweißstromstärke für beide Elektroden gleich eingestellt und so bemessen wird, daß die Abmessungen des gemeinsamen Schmelzbades quer zur Richtung der Elektroden nicht größer als die Breite der Stoßfläche sind, und daß die Fülllagen nach dem Erkalten des Schweißbades der Wurzel symmetrisch und gleichzeitig auf beiden Seiten aufgetragen werden.

2. Verfahren nach Anspruch 1, dadurch gekennzeichnet, daß die Breite der Stoßfläche mindestens ein Viertel der Dicke der zu verschweißenden Teile beträgt.

3. Verfahren nach Anspruch 1 oder 2, dadurch gekennzeichnet, daß die Schweißung der Stoßfläche mit nach Größe und Zeitverlauf gleichem Strom über die beiden nicht abschmelzenden Elektroden vorgenommen wird.

4. Verfahren nach Anspruch 1, 2 oder 3, dadurch gekennzeichnet, daß die Schweißung der Stoßfläche mit Helium als Schutzgas vorgenommen wird.

5. Verfahren nach einem der Ansprüche 1 bis 4, dadurch gekennzeichnet, daß mit den zu verschweißenden Teilen ein Blechstreifen zur Beeinflussung der Materialstruktur des Schmelzbades festgeklemmt wird.

6. Verfahren nach einem der Ansprüche 1 bis 5, dadurch gekennzeichnet, daß die Füllschweißungen mit kleinerer Leistung als die Schweißung der Stoßfläche erfolgen.

7. Verfahren nach einem der Ansprüche 1 bis 6, dadurch gekennzeichnet, daß mindestens die Schweißung der Stoßfläche durch WIG-Impulsschweißen ausgeführt wird.

8. Verfahren nach Anspruch 7, dadurch gekennzeichnet, daß die Regelung der Schweißstrompulsation mit der Regelung des Elektrodenabstandes kombiniert wird.

9. Verfahren nach einem der Ansprüche 1 bis 8, dadurch gekennzeichnet, daß beim Schweißen der Stoßfläche wesentliche Schweißdaten, insbesondere der Verlauf des Schweißstromes über die nicht abschmelzenden Elektroden, registriert werden.

10. Verfahren nach einem der Ansprüche 1 bis 9, dadurch gekennzeichnet, daß die Teile mit einer Vorspannung von $10^8$ Pa (10 kp/mm²) oder mehr aneinandergedrückt werden.

11. Einrichtung zur Ausübung des Verfahrens nach einem der Ansprüche 1 bis 10, dadurch gekennzeichnet, daß eine Aufnahmevorrichtung (29) für die zu verschweißenden Teile (2, 3) eine Platte (31) umfaßt, die quer zu der zu schweißenden Stoßfläche (8) verläuft und eine Ausnehmung (34) für eine Lehre (35) aufweist, mit der die Platte (31) und die zu verschweißenden Teile (2, 3) aufeinander auszurichten sind, daß an der Platte (31) Befestigungsmittel (48, 49) zum Verbinden der Platte (31) und der Teile (2, 3) angebracht sind und daß an der Platte (31) gemeinsame Zentrierbohrungen oder -zapfen (42, 43) für die Lehre (35) und eine Schweißmaschine (9) mit einer quer zu der Platte (31) bewegbaren Halterung (10) sitzen, die zwei Schweißköpfe (78, 79) mit den nicht abschmelzenden Elektroden (80) trägt.

12. Einrichtung nach Anspruch 11, dadurch gekennzeichnet, daß die zu verschweißenden Teile (2, 3) in einer Einspannvorrichtung (28) sitzen, mit der die Teile (2, 3) zueinander ausgerichtet sind und an der Stoßfläche (8) aneinandergedrückt werden.

13. Einrichtung nach Anspruch 12, dadurch gekennzeichnet, daß die Einspannvorrichtung (28) über die zu verschweißenden Teile (2, 3) mit der Aufnahmevorrichtung (29) verbunden ist.

14. Einrichtung nach Anspruch 11, 12 oder 13, dadurch gekennzeichnet, daß die Halterung (10) zweiteilig ausgebildet ist, wobei jeder Halterungsteil (76, 77) einen Schweißkopf (78, 79) trägt und auf einer parallel zu der Stoßfläche (8) liegenden Spindel (68, 69) als Wandermutter angeordnet ist.

15. Einrichtung nach Anspruch 14, dadurch gekennzeichnet, daß die beiden Halterungsteile (76, 77) an einem gemeinsamen Rahmen (65) geführt sind, der mit der Platte (31) der Aufnahmevorrichtung (29) zu verbinden ist.

16. Einrichtung nach Anspruch 14 oder 15, dadurch gekennzeichnet, daß die beiden Spindeln (68, 69) über ein gemeinsames formschlüssiges Antriebsglied (72) mit einem Motor (75) verbunden sind.

17. Einrichtung nach einem der Ansprüche 11 bis 16, dadurch gekennzeichnet, daß die Schweißköpfe (78, 79) schwenkbar an der Halterung (10) befestigt sind.

18. Einrichtung nach einem der Ansprüche 11 bis 17, dadurch gekennzeichnet, daß an der Platte (65) zwei Seilrollen (84, 85) beweglich befestigt sind, die jeweils auf einer Seite der Stoßfläche (8) liegen und Versorgungsleitungen (82, 83) zu den Schweißköpfen (78, 79) führen.

19. Einrichtung nach einem der Ansprüche 11 bis 18, gekennzeichnet durch eine symmetrische Ausbildung mit einer durch die Stoßfläche (8) verlaufenden Symmetrieebene.

**Claims**

1. A method of connecting metal components to a butt seam by TIG welding of the processed root face and possibly by the application of filler layers likewise by TIG welding, characterised in that for the production of dimensionally accurate components for nuclear systems, in particular nuclear carrier structures, the components on the root face which is to be welded are provided with a butt surface having a width of at least 5 mm and the latter are pressed against one another, that the electrodes which do not fuse are symmetrically centred on the root face which is to be welded, that the root face is then through-welded simultaneously from both sides in a manner known per se with equal welding current set for the two electrodes and contrived to be such that the transverse dimensions of the common fusion bath with respect to the direction of the electrodes do not exceed the width of the butt surface, and that following the cooling of the welding bath of the root face the filler layers are applied symmetrically and simultaneously to both sides.

2. A method as claimed in claim 1, characterised in that the width of the butt surface amounts to at least one quarter of the thickness of the components which are to be welded.

3. A method as claimed in claim 1 or 2, characterised in that the welding of the butt surface is carried out via the two non-fusing electrodes using a current which is equal in terms of magnitude and timing.

4. A method as claimed in claim 1, 2 or 3 characterised in that the welding of the butt surface is carried out using helium as a shield gas.

5. A method as claimed in one of the claims 1 to 4, characterised in that a sheet metal strip is clamped to the components which are to be welded to influence the material structure of the fusion bath.

6. A method as claimed in one of the claims 1 to 5, characterised in that the filler welding is carried out at lower power than the welding of the butt surface.

7. A method as claimed in one of the claims 1 to 6, characterised in that at least the welding of the butt surface is carried out by TIG pulse welding.

8. A method as claimed in claim 7, characterised in that the regulation of the welding current pulsation is combined with the regulation of the electrode spacing.

9. A method as claimed in one of the claims 1 to 8, characterised in that fundamental items of welding data during the welding of the butt surface, in particular the flow of the welding current across the non-fusing electrodes, are recorded.

10. A method as claimed in one of the claims 1 to 9, characterised in that the components are pressed against one another at a bias voltage of $10^8$ Pa (10 kp/mm²) or more.

11. A device for the implementation of the method claimed in one of the claims 1 to 10, characterised in that a receiver (29) for the components (2, 3) to be welded comprises a plate (31) which runs transversely to the butt surface (8) to be welded and possesses a recess (34) for a gauge (35) by means of which the plate (31) and the components (2, 3) to be welded may be mutually aligned, that attachment means (48, 49) for connecting the plate (31) and the components (2, 3) are arranged on the plate (31), and that on the plate (31) there are arranged common centring bores or pegs (42, 43) for the gauge (35) and a welding machine (9) with a holder (10) which can be moved transversely to the plate (31) and which bears two welding heads (78, 79) with the non-fusing electrodes (80).

12. A device as claimed in claim 11, characterised in that the components (2, 3) which are to be welded are arranged in a clamping device (28) which aligns the components (2, 3) relative to one another and presses one against another on the butt surface (8).

13. A device as claimed in claim 12, characterised in that the clamping device (28) is connected to the receiving device (29) via the components (2, 3) which are to be welded.

14. A device as claimed in claim 11, 12 or 13 characterised in that the holder (10) consists of two parts, where each holder component (76, 77) bears a welding head (78, 79) and is arranged as a travelling nut on a spindle (68, 69) parallel to the butt surface (8).

15. A device as claimed in claim 14, characterised in that the two holder components (76, 77) are arranged on a common frame (65) which is to be connected to the plate (31) of the receiver (29).

16. A device as claimed in claim 14 or 15, characterised in that the two spindles (68, 69) are connected to a motor (75) via a common shape-locking drive element (72).

17. A device as claimed in one of the claims 11 to 16, characterised in that the welding heads (78, 79) are pivotably attached to the holder (10).

18. A device as claimed in one of the claims 11 to 17, characterised in that two cable pulleys (84, 85) are attached to the plate (65) so as to be mobile, each arranged on one side of the butt surface (8), and supply lines (82, 83) lead to the welding heads (78, 79).

19. A device as claimed in one of the claims 11 to 18, characterised by a symmetrical design comprising a plane of symmetry which runs through the butt surface (8).

**Revendications**

1. Procédé pour relier des pièces métalliques avec un cordon de soudure bout à bout par soudage à l'arc en atmosphère inerte avec électrode de tungstène (soudage TIG) du fond du chanfrein traité et éventuellement par le dépôt de couches de remplissage également avec soudage TIG, caractérisé par le fait que la fabrication de pièces détachées aux dimensions exactes pour des installations de la technique nucléaire, plus particulièrement de la structure de support du cœur, les pièces sont pourvues, au fond du chanfrein à souder, d'une surface d'about d'une largeur de 5 mm et pressées l'une contre l'autre au niveau de celle-ci, que les électrodes qui ne fondent pas sont centrées symétriquement au niveau du fond du chanfrein à souder, que le fond du chanfrein est ensuite, de façon connue, soudé à cœur, simultanément des deux côtés, l'intensité du courant de soudage étant réglée de façon identique pour les deux électrodes et ayant une valeur telle que les dimensions du bain de fusion commun, transversalement à la direction des électrodes, ne sont pas supérieures à la largeur de la surface d'about et que les couches de remplissage, après refroidissement du bain de fusion du fond du chanfrein, sont déposées symétriquement et simultanément des deux côtés.

2. Procédé selon la revendication 1, caractérisé par le fait que la largeur de la surface d'about est au moins égale au quart de l'épaisseur des pièces à souder.

3. Procédé selon la revendication 1 ou 2, caractérisé par le fait que le soudage de la surface d'about est opéré avec, pour les deux électrodes non fusibles, un même courant du point de vue de l'intensité et de l'allure dans le temps.

4. Procédé selon la revendication 1, 2 ou 3, caractérisé par le fait que le soudage de la surface d'about est opéré avec de l'hélium comme gaz de protection.

5. Procédé selon l'une des revendications 1 à 4, caractérisé par le fait qu'avec les pièces à souder est coincée une bande de tôle pour influencer la structure de la matière du bain de fusion.

6. Procédé selon l'une des revendications 1 à 5, caractérisé par le fait que les soudages de remplissage ont lieu avec une puissance qui est plus petite que celle pour le soudage de la surface d'about.

7. Procédé selon l'une des revendications 1 à 6, caractérisé par le fait qu'au moins le soudage de la surface d'about est réalisé par soudage TIG à arc pulsé.

8. Procédé selon la revendication 7, caractérisé par le fait que le réglage de la pulsation du courant de soudage est combiné au réglage de la distance des électrodes.

9. Procédé selon l'une des revendications 1 à 8, caractérisé par le fait que lors du soudage de la surface d'about on enregistre des données essentielles du soudage, plus particulièrement l'allure du courant de soudage passant par les électrodes non fusibles.

10. Procédé selon l'une des revendications 1 à 9, caractérisé par le fait que les pièces sont pressées les unes contre les autres avec une tension préalable de $10^8$ Pa (10 kp/mm$^2$).

11. Dispositif pour la mise en œuvre du procédé selon l'une des revendications 1 à 10, caractérisé par le fait qu'un dispositif de réception (29) pour les pièces à souder (2, 3) comporte une plaque (31) qui s'étend transversalement à la surface d'about (8) à souder et comporte une ouverture (34) pour un gabarit (35) avec lequel la plaque (31) et les pièces à souder (2, 3) sont à aligner entre elles, que la plaque (31) porte des moyens de fixation (48, 49) pour relier la plaque (31) et les pièces (2, 3) et que sur la plaque (31) sont prévus des perçages pour des chevilles communes de centrage (42, 43) pour le gabarit (35) et une machine à souder (9) avec un dispositif de support (10) déplaçable transversalement à la plaque (31) et portant deux têtes de soudage (78, 79) avec les deux électrodes non fusibles (80).

12. Dispositif selon la revendication 11, caractérisé par le fait que les pièces à souder (2, 3) sont montées dans un dispositif de serrage (28) à l'aide duquel les pièces (2, 3) sont alignées l'une par rapport à l'autre et sont pressées l'une contre l'autre au niveau de la surface d'about (8).

13. Dispositif selon la revendication 12, caractérisé par le fait que le dispositif de serrage (28) est relié, par l'intermédiaire des pièces à souder (2, 3), avec le dispositif de réception (29).

14. Dispositif selon la revendication 11, 12 ou 13, caractérisé par le fait que le dispositif de montage (10) est réalisé en deux parties, chaque partie (76, 77) du dispositif de support comportant une tête de soudage (78, 79) et est montée, en tant qu'écrou baladeur, sur une broche (68, 69) qui est parallèle à la surface d'about (8).

15. Dispositif selon la revendication 14, caractérisé par le fait que les deux éléments de support (76, 77) sont guidés sur un cadre commun (65) qui est à relier à la plaque (31) du dispositif de réception (29).

16. Dispositif selon la revendication 14 ou 15, caractérisé par le fait que les deux broches (68, 69) sont reliées à un moteur (75) par l'intermédiaire d'un organe d'entraînement commun (72) par formes complémentaires.

17. Dispositif selon l'une des revendications 11 à 16, caractérisé par le fait que les têtes de soudage (78, 79) sont fixées sur le dispositif de support (10) de façon à pouvoir basculer.

18. Dispositif selon l'une des revendications 11 à 17, caractérisé par le fait que sur la plaque (65) sont fixées, de façon mobile, deux roues à gorge (84, 85) disposées respectivement sur un côté de la surface d'about (8), et des lignes d'alimentation (82, 83) mènent aux têtes de soudage (78, 79).

19. Dispositif selon l'une des revendications 11 à 18, caractérisé par une réalisation symétrique avec un plan de symétrie qui passe par la surface d'about (8).

FIG 1

FIG 2

FIG 3

FIG 4

FIG 5

FIG 6

FIG 7